# EUROPEAN PATENT APPLICATION

(11) **EP 4 715 731 A1**
(43) Date of publication of application: **25.03.2026**
(21) Application number: 24201935.4
(22) Date of filing: 23.09.2024
(51) Int. Cl.: G06T 7/00, G06T 7/10

(54) **AUTOMATED SELECTION OF IMAGES FOR MULTI-PHASE LIVER STUDIES**

(71) Applicant: Koninklijke Philips N.V., 5656 AG Eindhoven (NL)
(72) Inventor: MYSORE SIDDU, Dinesh, 5656AG Eindhoven (NL); ADAK, Saptakatha, 5656AG Eindhoven (NL); PANDYA, maulik yogeshbhai, 5656AG Eindhoven (NL); SANIN, Ahmed Mele Vallopra, 5656 AG Eindhoven (NL)
(74) Representative: Philips Intellectual Property & Standards

(57) **Abstract**

Disclosed herein is a method that comprises: receiving (200) three-dimensional tomographic liver images (122), calculating (202) a first feature vector (128) by inputting the individual images (124) into a three-dimensional feature extractor (126), generating (204) at least one two-dimensional projection (130, 132, 134), calculating (206) at least one second feature vector (138, 140, 142) by inputting the projections into a two-dimensional feature extractor, creating (208) a combined feature vector (144); and receiving (210) an arterial phase image score (148), a portal venous phase image score (150), and a delay phase image score (152) by inputting the combined feature vector into a classifier module (146). The method further comprises: providing (212) an arterial phase image (156) using the arterial phase image score, providing (214) a portal venous phase image (158) using the portal phase image score, and providing (216) a delay phase image (160) using the delay phase image score.

## Description

### FIELD OF THE INVENTION

The invention relates to medial images, in particular to the use of medical imaging for multi-phase liver studies

### BACKGROUND OF THE INVENTION

Multi-phase liver imaging is a technique typically performed using MRI or CT to evaluate liver pathology, particularly for detecting liver lesions such as tumors. The procedure involves the intravenous injection of a contrast agent, which enhances the visibility of liver structures and vascular patterns. Following the injection, images are acquired in multiple phases to capture the dynamic distribution of the contrast agent. The arterial phase occurs shortly after the injection, and highlights the arterial blood supply, providing detailed visualization of the liver's arterial vasculature. The portal venous phase follows, capturing the blood flow through the portal vein, which is used for assessing liver parenchyma and detecting lesions that might not enhance in the arterial phase. Finally, the delayed phase images are taken several minutes after the injection, allowing for the assessment of washout patterns and the presence of capsule or fibrotic tissue, which is particularly useful for differentiating between benign and malignant lesions.

United States patent application publication US2024193781A1 discloses a contrast state determination device, a contrast state determination method, and a program that determines a contrast state even in a case where there is an organ that is not included in an image. A plurality of two-dimensional images including information of slice images of a subject at different positions are acquired from a first image series captured before or after a contrast agent is injected into the subject, an index value related to a contrast state is estimated from each of the plurality of two-dimensional images, and the contrast state of the first image series is determined on the basis of each of a plurality of the index values.

### SUMMARY OF THE INVENTION

The invention provides for a computer-implemented method, a computer program, and a medical system in the independent claims. Embodiments are given in the dependent claims.

In one aspect a computer-implemented method of medical imaging is disclosed. In particular it relates to a method for processing a series of three-dimensional medical images. The method comprises receiving a series of three-dimensional tomographic liver images. The method further comprises for individual images of the series of three-dimensional tomographic liver images calculating a first feature vector by inputting the individual images into a three-dimensional feature extractor. For individual images of the series of three-dimensional tomographic liver images the method further comprises generating at least one two-dimensional projection of the individual images. For individual images of the series of three-dimensional tomographic liver images the method further comprises calculating at least one second feature vector by inputting that at least one two-dimensional projection into a two-dimensional feature extractor. For individual images of the series of three-dimensional tomographic liver images the method further comprises creating a combined feature vector by concatenating the first feature vector and the at least one second feature vector. For individual images of the series of three-dimensional tomographic liver images the method further comprises receiving an arterial phase image score, a portal venous phase image score, and a delay phase image score in response to inputting the combined feature vector into a classifier module.

The method further comprises providing an arterial phase image from the series of three-dimensional tomographic liver images selected using the arterial phase image score for the individual images. The method further comprises providing a portal venous phase image from the series of three-dimensional tomographic liver images selected using the portal phase image score for the individual images. The method further comprises providing a delay phase image from the series of three-dimensional tomographic liver images selected using the delay phase image score for the individual images.

In another aspect a computer program comprising machine-executable instructions is disclosed. The computer program is configured to cause a computational system to perform an example of the computer-implemented method.

In another aspect a medical system is disclosed. The medical system comprises a memory storing machine-executable instructions. The medical system further comprises a computational system. Execution of the machine-executable instructions causes the computational system to perform an example of the method or computer-implemented method.

### BRIEF DESCRIPTION OF THE DRAWINGS

In the following preferred embodiments of the invention will be described, by way of example only, and with reference to the drawings in which:
Fig. 1 illustrates an example of a medical system.
Fig. 2 shows a flow chart which illustrates a method of using the medical system of Fig. 1.
Fig. 3 illustrates a further example of a medical system.
Fig. 4 illustrates a further example of a medical system that incorporates a cloud based computing system.
Fig. 5 illustrates the calculation of a two-dimensional projection of a three-dimensional tomographic liver image.
Fig. 6 shows an example of a two-dimensional projection of an arterial phase image, a portal venous phase image, and a delay phase image rendered in the axial direction.
Fig. 7 shows an example of a two-dimensional projection of an arterial phase image, a portal venous phase image, and a delay phase image rendered in the coronal direction.
Fig. 8 shows an example of a two-dimensional projection of an arterial phase image, a portal venous phase image, and a delay phase image rendered in the sagittal direction.
Fig. 9 shows a flow chart which illustrates an implementation of an artificial intelligence module configured to identify the arterial phase image, the portal venous phase image, and the delay phase image.

### DETAILED DESCRIPTION OF EMBODIMENTS

Like numbered elements in these figures are either equivalent elements or perform the same function. Elements which have been discussed previously will not necessarily be discussed in later figures if the function is equivalent.

In one aspect a computer-implemented method of medical imaging is disclosed. The method comprises receiving a series of three-dimensional tomographic liver images. A tomographic image as used herein encompasses a medical imaging technique that is able to provide images of the internal anatomy of a subject. The method further comprises, for individual images of the series of three-dimensional tomographic liver images, calculating a first feature vector by inputting the individual images into a three-dimensional feature extractor. A three-dimensional feature extractor is a feature extractor which takes as input a three-dimensional dataset. In this case, these are the individual images of the series of three-dimensional tomographic liver images. In response, the three-dimensional feature extractor outputs a first feature vector.

Then, for individual images of the series of three-dimensional tomographic liver images, the method further comprises generating at least one two-dimensional projection of the individual images. The two-dimensional projections process the three-dimensional dataset and provide a two-dimensional image which summarizes some property of the voxels that are projected onto that surface. The method further comprises calculating at least one second feature vector by inputting the at least one two-dimensional projection into a two-dimensional feature extractor. In this case the two-dimensional feature extractor is able to receive as input a two-dimensional dataset and then output the at least one second feature vector. There may be one feature vector for each projection that is available.

For the individual images of the series of three-dimensional tomographic liver images the method further comprises creating a combined feature vector by concatenating the first feature vector and the at least one second feature vector. The first feature vector and then all of the second feature vectors that are available are concatenated into a combined feature vector. The combined feature vector is descriptive of a single image of the series of three-dimensional tomographic liver images. The combined feature vector therefore characterizes or describes the individual image. For individual images of the series of three-dimensional tomographic liver images the method further comprises receiving an arterial phase image score, a portal venous phase image score, and a delay phase image liver image score in response to inputting the combined feature vector into a classifier module. The classifier module may be implemented using a variety of means.

For example, one can use a traditional machine learning algorithm like a Support Vector Machine (SVM), Random Forest, or even a simple Logistic Regression. First, collect a labeled dataset where each instance consists of a feature vector and its corresponding label. The corresponding label in this case would be to label if the individual image is a arterial phase image, a poral venous phase image, a delay phase image, or none of the above ("other"). Then, split this dataset into training and testing subsets. Train the classifier on the training set by feeding it the feature vectors and adjusting its parameters to minimize a loss function (e.g., hinge loss for SVM or log loss for logistic regression).

The method further comprises providing an arterial phase image from the series of three-dimensional tomographic liver images selected using the arterial phase image score for the individual images. For example, the arterial phase image score, the portal venous phase image score, and the delay phase image score may be scores that are assigned to each image that is characterized by the classifier module. For example, the arterial phase image could be chosen by choosing the image that had the highest arterial phase image score. The method further comprises providing a portal venous phase image from the series of three-dimensional tomographic liver images selected using the portal venous phase score for the individual images. The method further comprises providing a delay phase image from the series of three-dimensional tomographic liver images selected using the delay phase image score for the individual images. Likewise, the image with the highest portal phase image score could for example be selected as the portal venous phase image and the image with the highest score for the arterial phase image score could be selected as the arterial phase image score.

This example may be beneficial because in performing multi-phase liver studies it can be challenging to choose the proper arterial phase image, the best portal venous phase image, and the delay phase image. There are biological differences between subjects which make it difficult to predict the exact time after the injection of a contrast agent. The images therefore need to be selected on an individual basis for individuals. This may be particularly challenging because modalities such as computed-tomography and magnetic resonance imaging may both be used which result in quite different types of images as well as there being differences between various computed-tomography systems and in particular differences between magnetic resonance imaging systems. The proper choosing of these images may therefore be heavily dependent upon the skill and the experience of the technician or radiologist. This may lead to large inconsistencies when studies are being performed for the same subject but at different locations and/or with different medical personnel. These examples may provide for an improved means of selecting these various images as well as providing more consistency across various locations and personnel.

In another example the generation of the at least one two-dimensional projection of the individual images comprises performing ray tracing in one or more of the following directions: the coronal direction, the sagittal direction, and the axial direction. The production of one or more projections in these directions may provide valuable anatomical information on the subject. This may help to better construct the one or more second feature vectors. This may result in a higher quality selection of the arterial phase image, the portal venous phase image and the delay phase image.

In another example the ray tracing calculates any one of the following along individual rays: a maximum value, an average value, a standard deviation of values along the ray, a paired max and minimum value along the ray, and a paired max and average value along individual rays. These examples may be beneficial because they provide information about the overall anatomical structure of the subject into one two-dimensional projection. In particular the paired maximum/minimum values or the paired maximum and average values provide additional information about contrast distribution among prominent structures in comparison to the background in other layers. These may be particularly good in providing the arterial phase image score, the portal venous phase image score, and the delay phase image score.

In another example the method further comprises cropping the individual images to a liver region using a liver image segmentation module. When tomographic images are acquired from a subject their anatomical differences and the position of the liver may vary from person-to-person. First segmenting the liver and then cropping the image to the region where the liver is may provide for more consistent results from the classifier module. This may result in a better selection of the various phase images.

In another example the three-dimensional feature extractor and/or the two-dimensional feature extractor is implemented using any one of the following: a convolutional neural network with a removed output layer, a convolutional classifier, an encoder portion of an autoencoder, a random forest trained model or the Boruta technique, or the sequential forward selection model can be used to select sub set of relevant features required for the classification of the given volume as Arterial, portal venous or delay phase. These examples may be beneficial because they all provide effective means of generating a feature vector for either a three-dimensional or a two-dimensional dataset.

The training of a three-dimensional or two-dimensional feature extractor may be trained on generic image data. One would typically design a deep neural network, often using architectures like CNNs (Convolutional Neural Networks) or the architectures listed above for image data. The network is trained on a large labeled dataset using supervised learning, where the goal is to minimize a loss function, such as cross-entropy, through backpropagation. The earlier layers of the network learn to detect basic features (like edges or textures), while deeper layers capture more abstract features relevant to the specific task (such as object parts or overall shapes). After training, the network's intermediate layers can be used as a feature extractor, where these learned representations serve as input features for downstream tasks like classification, clustering, or transfer learning in other models.

In another example the method further comprises preprocessing the first feature vector and/or the at least one second feature vector using any one of the following before inputting the combined feature vector into a classifier module: performing normalization, performing dimensional reduction using principle component analysis, and combinations thereof. Both of these techniques may improve the quality of the feature vectors and lead to better results.

In another example the method further comprises receiving a 'other' score in response to inputting the combined feature vector into a classifier module. For example when the classifier module is trained, in addition to having the three classifications for the phase images, there may also be a other classification indicating that it is none of the three above. This may be effective in training the classifier to identify when an image is improperly formed or is none of the above three phase images. The method further comprises rejecting individual images if the 'other' score is above a predetermined threshold. This may for example be useful in quality control and ensuring that the wrong images are selected as one of the phase images.

In another example the method further comprises identifying one or more lesions in the arterial phase image, the portal venous phase image, and/or the delay phase image using a lesion segmentation module. This may for example be particularly beneficial because it may provide a means of automatically selecting the phase images and then identifying lesions or tumors within them.

In another example the method further comprises calculating an LI-RADS score using the identification of the one or more lesions, the arterial phase image, the portal venous phase image, and/or the delay phase image. This example may be beneficial because the three phase images are used to calculate a LI-RADS score. Because the various phase images are selected better the accuracy of the LI-RADS score may be more accurate.

The LI-RADS (Liver Imaging Reporting and Data System) score is a standardized method used to evaluate and categorize liver lesions, particularly in patients at risk for hepatocellular carcinoma (HCC), based on findings from MRI or CT imaging. The imaging analysis begins with assessing the lesion's appearance across different phases: arterial phase hyperenhancement (APHE) is checked in the arterial phase image, while "washout" and a capsule appearance are evaluated in the portal venous phase image and delayed phase phases. These features are key indicators of HCC.

One then considers the size of the lesion (largest Diameter of the lesion on 2D slices) and other characteristics, such as threshold growth (temporal growth) , fat content or blood products, to assign a LI-RADS category. The categories range from LR-1 (definitely benign) to LR-5 (definitely HCC), with LR-M indicating lesions suggestive of malignancy but not specific for HCC. Ancillary features, such as the presence of intra-tumoral fat or a nodule-in-nodule architecture, can further refine the category by increasing or decreasing the suspicion of HCC. The final LI-RADS score guides clinical management, for example help to determine the need for follow-up imaging, biopsy, or treatment.

In an example, the three-dimensional tomographic liver images comprise meta data that comprises data representative for example said acquisition time. Generally, the three-dimensional tomographic liver images may comprise meta data representative for other types of parameters such as acquisition parameters.

In another example the series of three-dimensional tomographic liver images comprise an acquisition time. The method further comprises providing an alarm for any one of the following: a first duration calculated between the acquisition time of the arterial phase image and the acquisition time of the portal venous phase image is outside of a first time range, a second duration calculated between an acquisition time of the portal venous phase image and the acquisition time of the delay phase image is outside of a second time range, a third duration calculated between the acquisition time of the arterial phase image and the acquisition time of the delay phase image is outside of the third time range. This example provides a double check on the predictions made using the classifier module. Although there are anatomical/physiological differences between various subjects, it may be expected that the duration between the various phases fits a range for most subjects. The use of this alarm system may be beneficial because it may provide a means of avoiding errors.

In another example the series of three-dimensional tomographic liver images are contrast phase images.

In another example the method further comprises controlling a medical imaging system to acquire the series of three-dimensional tomographic liver images from a subject.

In another example the medical imaging system is a magnetic resonance imaging system.

In another example the medical imaging system is a computed-tomography system.

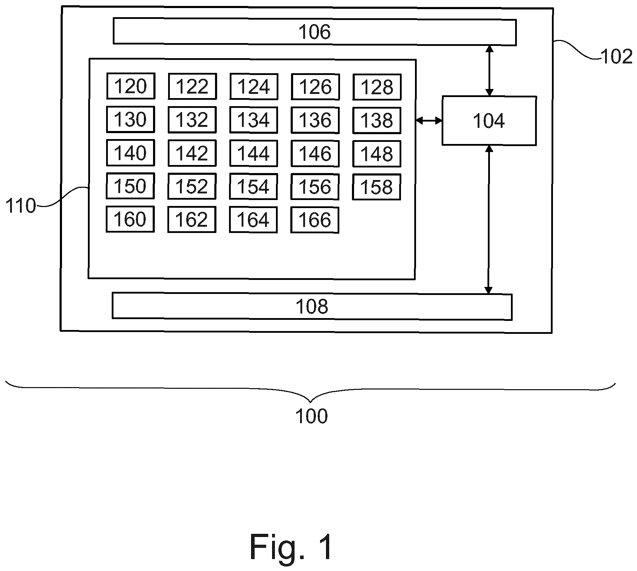

Fig. 1 illustrates an example of a medical system 100. The medical system 100 is shown as comprising a computer 102 with a computational system 104. The computer 102 may represent one or more computers at one or more locations and the computational system 104 may also represent one or more computational systems or computing cores located at one or more locations. The computational system 104 is shown as being in communication with an optional hardware interface 106 and an optional user interface 108. The hardware interface 106 may enable the control of other components of the medical system 100 if they are present. The user interface 108 may enable an operator to control the operation and function of the medical system 100.

The computational system 104 is further shown as being in communication with a memory 110. The memory 110 represents various types of memory that are accessible to the computational system 104. In some examples the memory 110 may be or may comprise a non-transitory storage medium.

The memory 110 is shown as containing machine-executable instructions 120. The machine-executable instructions 120 may enable the computational system 104 to perform various numerical and image processing tasks as well as controlling other components of the medical system 100 if they are present. For example, the machine-executable instructions 120 may in some examples be used to control a computed tomography or magnetic resonance imaging system.

The memory 110 is further shown as containing a series of three-dimensional tomographic liver images 122. The three-dimensional tomographic liver images 122 may take different forms in different examples. In one case each three-dimensional tomographic liver image may be a collection of slice images from a computed tomography system. In the case of magnetic resonance imaging, each of the three-dimensional tomographic liver images may either be a collection of two-dimensional slices or a three-dimensional magnetic resonance image.

The memory 110 is shown as containing an individual image 124. The individual image 124 is one of the series of three-dimensional tomographic live images 122. The memory 110 is further shown as containing a three-dimensional feature extractor 126. The three-dimensional feature extractor 126 receives the individual image 124 as input and then outputs a first feature vector 128. The memory 110 is shown as containing a first feature vector 128 that was calculated using the individual image 124 and the three-dimensional feature extractor 126.

The memory is then shown as containing three projections 130, 132, 134 of the individual image 124. 130 is a coronal projection of the individual image 124, 132 is a sagittal projection of the individual image 124 and 134 is an axial projection of the individual image 124. In this example there are three projections of the individual image 124 that have been calculated. In other examples there may only be one or two of these projections 130, 132, 134. The memory 110 is further shown as containing a two-dimensional feature extractor 136. The memory is then shown as containing three second feature vectors 138, 140, 142 that were obtained by inputting the projections 130, 132, 134 into the two-dimensional feature extractor. 138 is the second feature vector of the coronal projection 130. 140 is the second feature vector of the sagittal projection 132. 142 is the second feature vector of the axial projection 134.

The memory 110 is further shown as containing a combined feature vector 144 that was constructed by concatenating the first feature vector 128 with the second feature vectors 138, 140, and 142. The memory 110 is further shown as containing a classifier module 146. The classifier module 146 is configured for receiving the combined feature vector 144 as input and then providing an arterial phase image score 148 for the individual image 124. It additionally outputs a portal venous phase image score 150 for the individual image 124 and the delay phase image score 152 for the individual image 124. These scores 148, 150, 152 are a probability that the individual image 124 is the best choice for the arterial phase image, the sagittal phase image, and the delay phase image respectively. The process that was illustrated for the individual image 124 may be repeated for the entire series of three-dimensional tomographic liver images 122.

The memory 110 is further shown as containing the phase image scores 154 for the series of three-dimensional tomographic liver images 122. In this example each of the series of three-dimensional tomographic liver images have been assigned these scores 154. Using these scores the arterial phase image 156, the portal venous phase image 158, and the delay phase image 160 may be selected. For example, the image which has the highest probability of being each of these images may be selected from the series of three-dimensional tomographic liver images 122. This may be advantageous because it may provide a means for selecting these images 156, 158, 160 in a more consistent and accurate means.

The memory 110 is shown as optionally containing a segmentation algorithm 162 that is able to segment lesions in the arterial phase image 156, the portal venous phase image 158, and the delay phase image 160. The memory 110 is shown as optionally containing an LI-RADS score 166 that was calculated using the segmentation 164 and the arterial phase image 156, the portal venous phase image 158, and the delay phase image 160. This may also be advantageous because the LI-RADS score 166 may be more accurately calculated because the various phase images 156, 158, 160 were more accurately chosen.

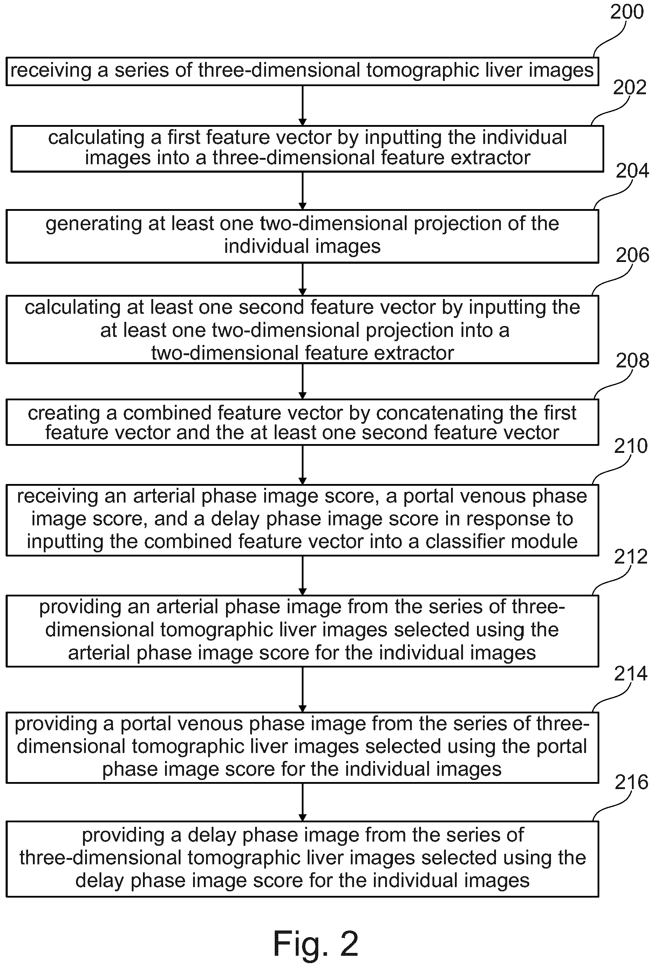

Fig. 2 shows a flowchart which illustrates a method of operating the medical system 100 of Fig. 1. In step 200, the series of three-dimensional tomographic liver images 122 are received. Steps 202-210 are performed for each of the individual images 124. In step 202, the first feature vector 128 is calculated by inputting the individual image 124 into the three-dimensional feature extractor 126. In step 204, at least one two-dimensional projection 130, 132, 134 is generated from the individual image 124. In step 206, the at least one feature vector 138, 140, 142 is determined by inputting the individual projections 130, 132, 134 into the two-dimensional feature extractor 136. In step 208, the combined feature vector 144 is calculated for the individual image 124 by concatenating the first feature vector 128 with the second feature vectors 138, 140, 142. The arterial phase image score 148, the portal venous phase image score 150, and the delay phase image score 152 are received for the individual image 124 in response to inputting the combined feature vector 144 into the classifier module 146.

Steps 212, 214, and 216 are then performed collectively for the series of three-dimensional tomographic liver images 122. In step 212, the arterial phase image 156 is provided from the series of three-dimensional tomographic liver images 122 by selecting it using the arterial phase image scores 148 for the individual images that make up the series of three-dimensional tomographic liver images 122. In step 214, the portal venous phase image 158 is provided by choosing it from the series of three-dimensional tomographic liver images 122 using the portal venous phase image scores 150. In step 216, the delay phase image 160 is provided by selecting it from the series of three-dimensional tomographic liver images 122 using the delay phase image scores 152 for the individual images.

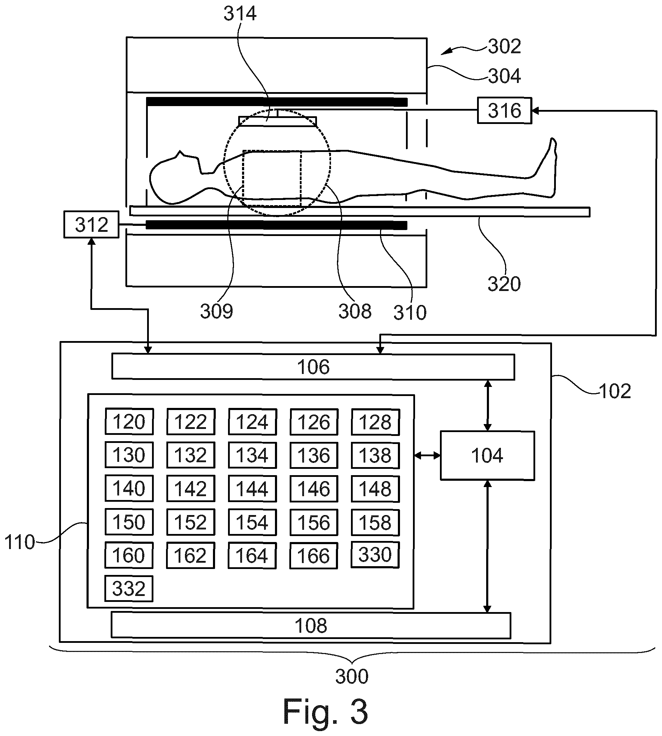

Fig. 3 illustrates a further example of a medical system 300. In this example, the medical system 300 is similar to that described in Fig. 1 except that it additionally comprises a magnetic resonance imaging system 302. The use of a magnetic resonance imaging system 302 is exemplary. In other examples the magnetic resonance imaging system 302 may be substituted with a computed tomography system.

The magnetic resonance imaging system 302 comprises a magnet 304. The magnet 304 is a superconducting cylindrical type magnet with a bore 306 through it. It is also possible to use both a split cylindrical magnet and a so-called open magnet. A split cylindrical magnet is similar to a standard cylindrical magnet, except that the cryostat has been split into two sections to allow access to the iso-plane of the magnet, such magnets may for instance be used in conjunction with charged particle beam therapy. An open magnet has two magnet sections, one above the other with a space in-between that is large enough to receive a subject. The arrangement of the two sections area is similar to that of a Helmholtz coil. Open magnets are popular because the subject is less confined. Inside the cryostat of the cylindrical magnet there is a collection of superconducting coils.

Within the bore 306 of the cylindrical magnet 304 there is an imaging zone 308 where the magnetic field is strong and uniform enough to perform magnetic resonance imaging. A field of view 309 is shown within the imaging zone 308. The k-space data are acquired for the field of view 309. The region of interest could be identical with the field of view 309 or it could be a sub volume of the field of view 309. A subject 318 is shown as being supported by a subject support 320 such that at least a portion of the subject 318 is within the imaging zone 308 and the field of view 309.

Within the bore 306 of the magnet there is also a set of magnetic field gradient coils 310 which is used for the acquisition of measured k-space data to spatially encode magnetic spins within the imaging zone 308 of the magnet 304. The magnetic field gradient coils 310 are connected to a magnetic field gradient coil power supply 312. The magnetic field gradient coils 310 are intended to be representative. Typically, magnetic field gradient coils 310 contain three separate sets of coils for spatial encoding in three orthogonal spatial directions. A magnetic field gradient power supply supplies current to the magnetic field gradient coils. The current supplied to the magnetic field gradient coils 310 is controlled as a function of time and may be ramped or pulsed.

Adjacent to the imaging zone 308 is a radio frequency coil 314 for manipulating the orientations of magnetic spins within the imaging zone 308 and for receiving radio transmissions from spins also within the imaging zone 308. The radio frequency antenna may contain multiple coil elements. The radio frequency antenna may also be referred to as a channel or antenna. The radio frequency coil 314 is connected to a radio frequency transceiver 316. The radio frequency coil 314 and radio frequency transceiver 316 may be replaced by separate transmit and receive coils and a separate transmitter and receiver. It is understood that the radio frequency coil 314 and the radio frequency transceiver 316 are representative. The radio frequency coil 314 is intended to also represent a dedicated transmit antenna and a dedicated receive antenna. Likewise, the transceiver 316 may also represent a separate transmitter and receiver. The radio frequency coil 314 may also have multiple receive/transmit elements and the radio frequency transceiver 316 may have multiple receive/transmit channels. The transceiver 316 and the gradient controller 312 are shown as being connected to the hardware interface 106 of the computer system 102.

The magnetic resonance imaging system 302 is shown as being controlled by the computer system 102. The memory 110 is further shown as containing pulse sequence commands 330. The pulse sequence commands 330 are used to control the magnetic resonance imaging system 302 to repeatedly acquire k-space data 332. The k-space data 332 may be used to reconstruct the individual three-dimensional images that make up the series of three-dimensional tomographic liver images 122. The pulse sequence commands 330 may for example be executed periodically to go through and systematically acquire the series of three-dimensional tomographic liver images 122.

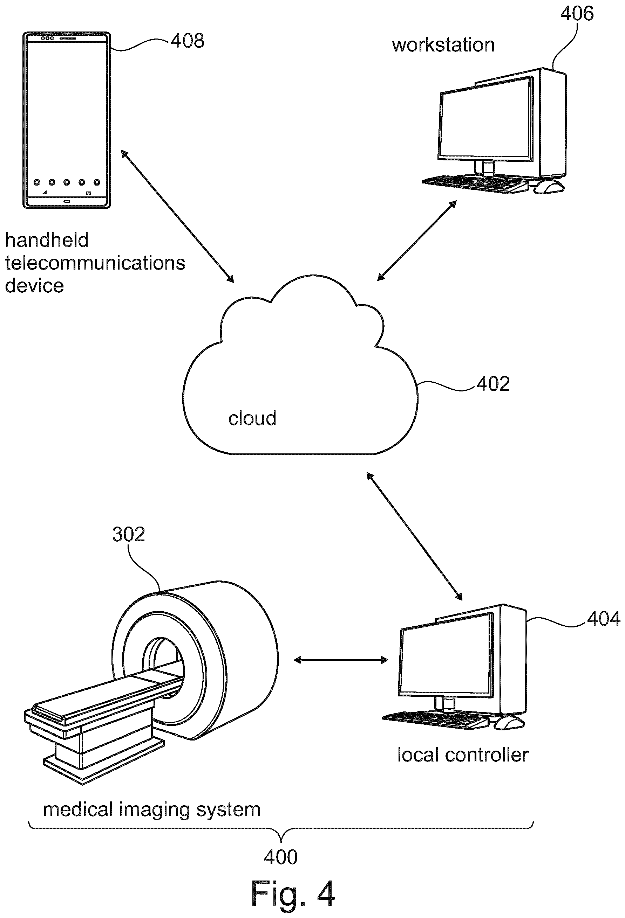

Fig. 4 illustrates a further example of a medical system 400. The medical system 400 comprises the medical imaging system 302 (which could for example be a magnetic resonance imaging system or a computed tomography system) as well as a cloud based computing system 402, a local controller 404 for the medical imaging system 302, a radiology workstation 406, and a handheld telecommunications device 408. The functionality of the computer 102 in Figs. 1 and 3 can be distributed amongst the various devices 702, 704, 706, and 708. The cloud based computing system 402 could be made up of networked servers and/or virtual machines available over the internet or other network.

A typical configuration would be to use the local controller 404 to control the medical imaging system 302 to acquire medical imaging data (such as k-space data for magnetic resonance imaging and x-ray profiles for computed tomography). The reconstruction of the series of three-dimensional tomograph liver images 122 as well as the steps illustrated in Fig. 2 may be performed by the cloud based computing system 702. The resulting the series of three-dimensional tomograph liver images 122 as well as the arterial phase image 156, the portal venous phase image, and the delay phase image may be made available to the workstation 406, the handheld telecommunications device 408, and the local controller 404.

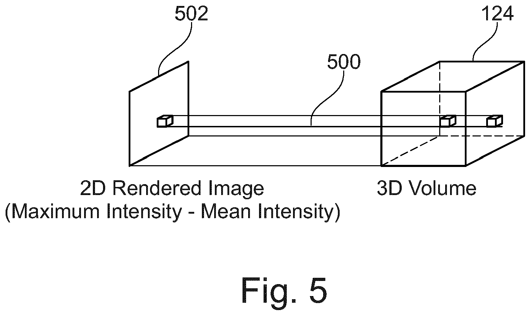

Fig. 5 illustrates the calculation of the projections 130, 132, and 134. On the right hand side is shown one of the individual images 124 from the series of three-dimensional tomographic liver images 122. These images are made of a collection of voxels. Along one of the coordinate axes there is a ray projection 500 which is projected onto a two-dimensional image 502. This is repeated for each of the voxels and this is used to construct the various projections 138, 140, 142. In this example two values were assigned to each voxel in the two-dimensional image 502. This is the maximum intensity and the mean intensity along the ray projection 500. In addition to looking at the maximum intensity or mean intensity other values such as the maximum, only the mean or other values may be used. During experimentation the use of the maximum intensity and mean intensity were shown to be particularly effective.

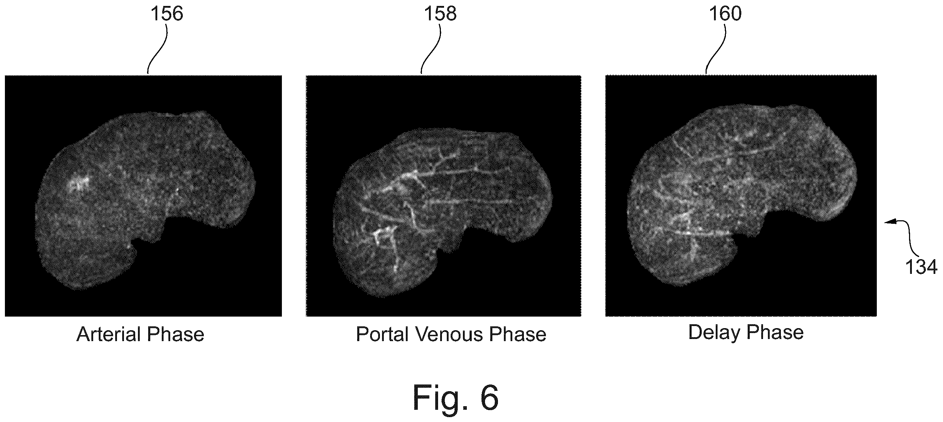

Figs. 6, 7, and 8 show examples of which projections 130, 132, 134 for the arterial phase image 156, the portal venous phase image 158, and the delay phase image 160 are selected from a series of three-dimensional tomographic liver images 122. The images show the maximum value in each projection.

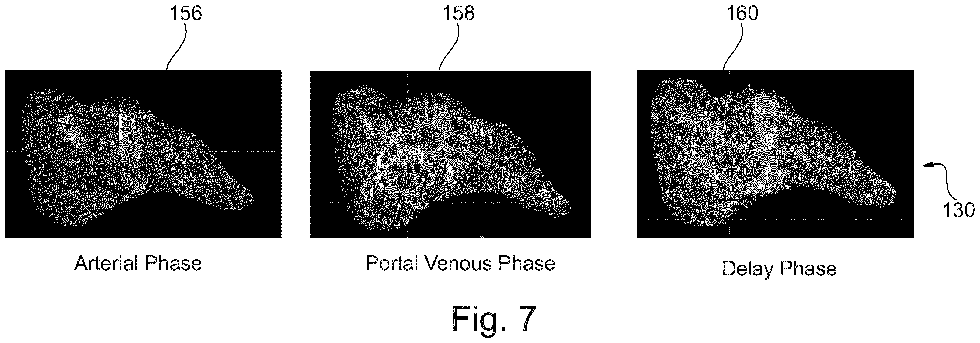

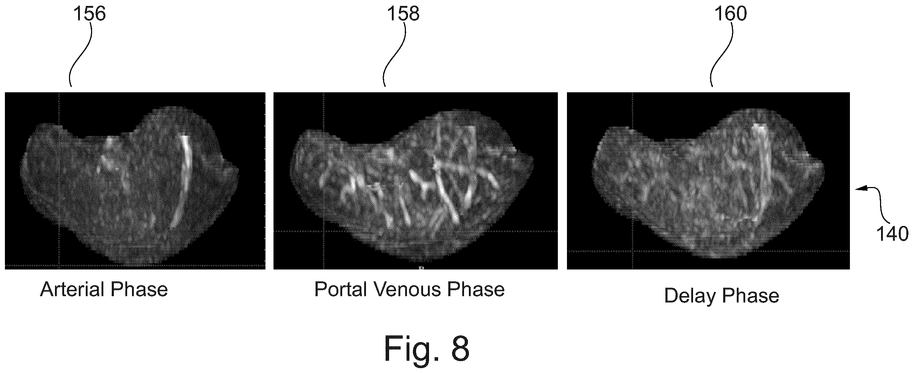

Fig. 6 shows the arterial phase image 156, the portal venous phase image 158 and the delay phase image 160 projected into the axial direction 134. Likewise, Fig. 7 shows the arterial phase image 156, the portal venous phase image 158 and the delay phase image 160 projected in the coronal direction 130. Fig. 8 shows the arterial phase image 156, the portal venous phase image 158, and the delay phase image 160 projected in the sagittal direction 140. The images shown in Figs. 6, 7, and 8 illustrate that the projections for the arterial phase 156, the portal venous phase 158, and the delay phase 160 are all quite different from each other when the projections 130, 132, 134 are examined. The differences in these images enable the construction of second feature vectors 138, 140, 142 that can be used to accurately choose the various phase images 156, 158, and 160. The inclusion of the second feature vectors 138, 140, and 142 provide for better performance than if only the first feature vector 128 were calculated.

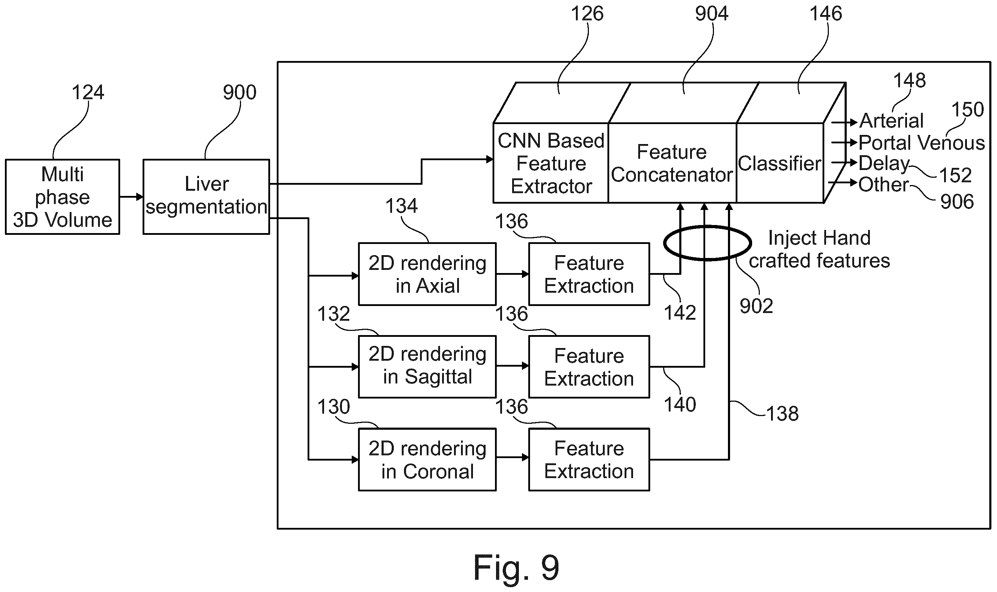

Fig. 9 shows a flowchart which illustrates one implementation of the artificial intelligence modules configured to receive the individual image 124 and output the phase image scores 148, 150, and 152. The individual image 124 is labeled as a multi-phase 3D volume. This is then input into an optional liver segmentation 900 that may for example be used to reduce the volume of the individual image 124 to just an area around the liver. The segmented image is then input into a three-dimensional feature extractor 126, which in this case may be a convolutional neural network-based feature extractor.

This image 124 is also used to calculate a two-dimensional projection in the axial direction 134, a two-dimensional projection or rendering in the sagittal direction 132 and a two-dimensional rendering or projection in the coronal direction 130. Each of these projections are input into a two-dimensional feature extractor 136. In this example there is an individual feature extractor which has been trained for each projection individually. In other examples, a single feature extractor may be used for all three projections. After feature extraction, the second feature vectors 138, 140, 142 optionally have hand-crafted features injected 902. In some examples some pre-processing may also take place.

The output of the three-dimensional feature extractor 126 is the first feature vector 128. The first feature vector 128 is then concatenated with the second feature vector of the coronal projection, the second feature vector of the sagittal projection 140, and the second feature vector of the axial projection 142 using the feature concatenator 904. The concatenated combined feature vector 144 is then input into the classifier 146. For the image 124, the classifier 146 then outputs, in this example, four numbers, the arterial phase image score 148, the portal venous phase image score 150, and the delay phase image score 152 as well as an "other" score 906. As was discussed above, the image scores 148, 150, and 152 predict whether the particular image 124 is the arterial phase image 156, the portal venous phase image 158, or the delay phase image 160. The classification "other" 906 may be used to indicate if the image 124 is improperly formatted or also is determined to be none of the other classifications 148, 150, and 152. The use of the other classification 154 may for example be useful in quality control and avoid choosing the wrong image.

It is understood that one or more of the aforementioned examples or embodiments of the invention may be combined as long as the combined embodiments are not mutually exclusive.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor or computational system of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the computational system of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the computational system. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example, data may be retrieved over a modem, over the internet, or over a local area network. Computer executable code embodied on a computer readable medium may be transmitted using any appropriate medium, including but not limited to wireless, wire line, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

`Computer memory' or 'memory' is an example of a computer-readable storage medium. Computer memory is any memory which is directly accessible to a computational system. `Computer storage' or 'storage' is a further example of a computer-readable storage medium. Computer storage is any non-volatile computer-readable storage medium. In some embodiments computer storage may also be computer memory or vice versa.

A `computational system' as used herein encompasses an electronic component which is able to execute a program or machine executable instruction or computer executable code. References to the computational system comprising the example of "a computational system" should be interpreted as possibly containing more than one computational system or processing core. The computational system may for instance be a multi-core processor. A computational system may also refer to a collection of computational systems within a single computer system or distributed amongst multiple computer systems. The term computational system should also be interpreted to possibly refer to a collection or network of computing devices each comprising a processor or computational systems. The machine executable code or instructions may be executed by multiple computational systems or processors that may be within the same computing device or which may even be distributed across multiple computing devices.

Machine executable instructions or computer executable code may comprise instructions or a program which causes a processor or other computational system to perform an aspect of the present invention. Computer executable code for carrying out operations for aspects of the present invention may be written in any combination of one or more programming languages, including an object-oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly. In other instances, the machine executable instructions or computer executable code may be in the form of programming for programmable logic gate arrays.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It is understood that each block or a portion of the blocks of the flowchart, illustrations, and/or block diagrams, can be implemented by computer program instructions in form of computer executable code when applicable. It is further under stood that, when not mutually exclusive, combinations of blocks in different flowcharts, illustrations, and/or block diagrams may be combined. These computer program instructions may be provided to a computational system of a general-purpose computer, special purpose computer, or other programmable data processing apparatus to produce a machine, such that the instructions, which execute via the computational system of the computer or other programmable data processing apparatus, create means for implementing the functions/acts specified in the flowchart and/or block diagram block or blocks.

These machine executable instructions or computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The machine executable instructions or computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

A `user interface' as used herein is an interface which allows a user or operator to interact with a computer or computer system. A `user interface' may also be referred to as a 'human interface device.' A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer to indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, pedals, wired glove, remote control, and accelerometer are all examples of user interface components which enable the receiving of information or data from an operator.

A `hardware interface' as used herein encompasses an interface which enables the computational system of a computer system to interact with and/or control an external computing device and/or apparatus. A hardware interface may allow a computational system to send control signals or instructions to an external computing device and/or apparatus. A hardware interface may also enable a computational system to exchange data with an external computing device and/or apparatus. Examples of a hardware interface include but are not limited to: a universal serial bus, IEEE 1394 port, parallel port, IEEE 1284 port, serial port, RS-232 port, IEEE-488 port, Bluetooth connection, Wireless local area network connection, TCP/IP connection, Ethernet connection, control voltage interface, MIDI interface, analog input interface, and digital input interface.

A 'display' or `display device' as used herein encompasses an output device or a user interface adapted for displaying images or data. A display may output visual, audio, and or tactile data. Examples of a display include, but are not limited to: a computer monitor, a television screen, a touch screen, tactile electronic display, Braille screen,

Cathode ray tube (CRT), Storage tube, Bi-stable display, Electronic paper, Vector display, Flat panel display, Vacuum fluorescent display (VF), Light-emitting diode (LED) displays, Electroluminescent display (ELD), Plasma display panels (PDP), Liquid crystal display (LCD), Organic light-emitting diode displays (OLED), a projector, and Head-mounted display.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

### REFERENCE SIGNS LIST

- 100: medical system
- 102: computer
- 104: computational system
- 106: optional hardware interface
- 108: optional user interface
- 110: memory
- 120: machine executable instructions
- 122: series of three-dimensional tomographic liver images
- 124: individual image
- 126: three-dimensional feature extractor
- 128: first feature vector
- 130: coronal projection of individual image
- 132: sagittal projection of individual image
- 134: axial projection of individual image
- 136: two dimensional feature extractor
- 138: second feature vector of coronal projection
- 140: second feature vector of sagittal projection
- 142: second feature vector of axial projection
- 144: combined feature vector
- 146: classifier module
- 148: arterial phase image score for individual image
- 150: portal venous phase image score of individual image
- 152: delay phase image score for individual image
- 154: phase image scores for series of three-dimensional tomographic liver images
- 156: arterial phase image
- 158: portal venous phase image
- 160: delay phase image
- 162: segmentation algorithm
- 164: segmentation identifying lesion
- 166: LI-RADS score
- 200: receiving a series of three-dimensional tomographic liver images
- 202: for individual images of the series of three-dimensional tomographic liver images calculating a first feature vector by inputting the individual images into a three-dimensional feature extractor
- 204: for individual images of the series of three-dimensional tomographic liver images generating at least one two-dimensional projection of the individual images
- 206: for individual images of the series of three-dimensional tomographic liver images calculating at least one second feature vector by inputting the at least one two-dimensional projection into a two-dimensional feature extractor
- 208: for individual images of the series of three-dimensional tomographic liver images creating a combined feature vector by concatenating the first feature vector and the at least one second feature vector
- 210: for individual images of the series of three-dimensional tomographic liver images receiving an arterial phase image score, a portal venous phase image score, and a delay phase image score in response to inputting the combined feature vector into a classifier module
- 212: providing an arterial phase image from the series of three-dimensional tomographic liver images selected using the arterial phase image score for the individual images
- 214: providing a portal venous phase image from the series of three-dimensional tomographic liver images selected using the portal phase image score for the individual images
- 216: providing a delay phase image from the series of three-dimensional tomographic liver images selected using the delay phase image score for the individual images
- 300: medical system
- 302: magnetic resonance imaging system
- 304: magnet
- 306: bore of magnet
- 308: imaging zone
- 309: field of view
- 310: magnetic field gradient coils
- 312: magnetic field gradient coil power supply
- 314: radio frequency coil
- 316: transceiver
- 318: subject
- 320: subject support
- 330: pulse sequence commands
- 332: k-space data
- 400: medical system
- 402: cloud computing system
- 404: local controller
- 406: workstation
- 108: handheld telecommunication device
- 500: ray projection
- 502: two-dimensional image
- 900: liver segmentation
- 902: optional hand crafted features
- 904: feature concatenator
- 906: "other" score

## Claims

1. A computer implemented method of medical imaging, wherein the method comprises receiving (200) a series of three-dimensional tomographic liver images (122),
wherein the method further comprises for individual images (124) of the series of three-dimensional tomographic liver images:
- calculating (202) a first feature vector (128) by inputting the individual images into a three-dimensional feature extractor (126);
- generating (204) at least one two-dimensional projection (130, 132, 134) of the individual images;
- calculating (206) at least one second feature vector (138, 140, 142) by inputting the at least one two-dimensional projection into a two-dimensional feature extractor;
- creating (208) a combined feature vector (144) by concatenating the first feature vector and the at least one second feature vector; and
- receiving (210) an arterial phase image score (148), a portal venous phase image score (150), and a delay phase image score (152) in response to inputting the combined feature vector into a classifier module (146);
wherein the method further comprises:
- providing (212) an arterial phase image (156) from the series of three-dimensional tomographic liver images selected using the arterial phase image score for the individual images;
- providing (214) a portal venous phase image (158) from the series of three-dimensional tomographic liver images selected using the portal phase image score for the individual images; and
- providing (216) a delay phase image (160) from the series of three-dimensional tomographic liver images selected using the delay phase image score for the individual images.

2. The computer implemented method of claim 1, wherein generating the at least one two-dimensional projection of the individual images comprises performing raytracing (500) in one or more of the following directions: coronal direction, sagittal direction, and axial direction.

3. The computer implemented method of claim 2, wherein the raytracing calculates any one of the following: maximum value, an average value, a standard deviation, a paired maximum and minimum value, and a paired maximum and average value along individual rays.

4. The computer implemented method of claim 1, 2, or 3, wherein the method further comprises cropping the individual images to a liver containing region using a liver image segmentation module.

5. The computer implemented method of any one of the preceding claims, wherein the three-dimensional feature extractor and/or the two-dimensional feature extractor is implemented using any one of the following: a convolutional neural network with a removed output layer, a convolutional classifier, an encoder portion of an autoencoder, random forest model trained using the Boruta technique, and the sequential forward selection method.

6. The computer implemented method claim 5, wherein the method further comprises preprocessing the first feature vector and/or the at least one second feature vector using any one of the following before inputting the combined feature vector into a classifier module: performing normalization, performing dimensional reduction using principal component analysis, and combinations thereof.

7. The computer implemented method of any one of the preceding claims, wherein the method further comprises:
- receiving an "other" score (906) in response to inputting the combined feature vector into the classifier module; and
- rejecting individual images if the "other" score is above a predetermined threshold.

8. The computer implemented method of any one of the following, wherein the method further comprises identifying one or more lesions (164) in the arterial phase image, the portal venous phase image, and or the delay phase image using a lesion segmentation module.

9. The computer implemented method of claim 8, wherein the method further comprises calculating an LI-RADS score (166) using any one of the following: the identification of the one or more lesions, the arterial phase image, the portal venous phase image, the delay phase image, and combinations thereof.

10. The computer implemented method of any one of the preceding claims, wherein the series of three-dimensional tomographic liver images comprise an acquisition time, wherein the method further comprises providing an alarm for any one of the following:
- a first duration calculated between the acquisition time of the arterial phase image and the acquisition time of the portal venous phase image is outside of a first time range;
- a second duration calculated between the acquisition time of the portal venous phase image and the acquisition time of the delay phase image is outside of a second time range; and
- a third duration calculated between the acquisition time of the arterial phase image and the acquisition time of delay phase image is outside of a third time range.

11. The computer implemented method of any one of the preceding claims, wherein the series of three-dimensional tomographic liver images are contrast agent phase images.

12. The computer implemented method of any one of the preceding claims, wherein the method further comprises controlling a medical imaging system to acquire the series of three-dimensional tomographic liver images from a subject (318).

13. The computer implemented method of claim 12, wherein the medical imaging system is a magnetic resonance imaging system (302) or a computed tomography system.

14. A computer program comprising machine executable instructions (120) configured for causing a computational system (104) to perform the method of any one of claims 1 through 13.

15. A medical system (100, 300, 400) comprising:
- a memory (110) storing machine executable instructions (120),
- a computational system (104), wherein execution of the machine executable instructions causes the computational system to perform the method of any one of claims 1 through 13.
